Europäisches Patentamt

European Patent Office

Office européen des brevets

(11) Veröffentlichungsnummer: **0 283 711**
**B1**

(12) **EUROPÄISCHE PATENTSCHRIFT**

(45) Veröffentlichungstag der Patentschrift:
25.07.90

(51) Int. Cl.⁵: **B01J 13/06, B41M 5/124**

(21) Anmeldenummer: 88102302.2

(22) Anmeldetag: 17.02.88

(54) Verfahren zur Mikroverkapselung von hydrophoben Ölen, die danach erhältlichen Mikrokapseln und deren Verwendung.

(30) Priorität: 24.03.87 DE 3709586

(43) Veröffentlichungstag der Anmeldung:
28.09.88 Patentblatt 88/39

(45) Bekanntmachung des Hinweises auf die Patenterteilung:
25.07.90 Patentblatt 90/30

(84) Benannte Vertragsstaaten:
AT BE CH DE ES FR GB GR IT LI LU NL SE

(56) Entgegenhaltungen:
EP-A- 0 046 415
EP-A- 0 188 807
FR-A- 2 093 646

(73) Patentinhaber: Papierfabrik August Koehler AG,
Postfach 1245, D-7602 Oberkirch(DE)

(72) Erfinder: Pietsch, Günther, Burgwedeler Strasse 150,
D-3004 Isernhagen 2/HB(DE)
Erfinder: Schrader, Karl-Heinz, Parsevalstrasse 27,
D-3000 Hannover 1(DE)

(74) Vertreter: Hagemann, Heinrich, Dr. Dipl.-Chem. et al,
Patentanwälte HAGEMANN & KEHL Ismaninger
Strasse 108 Postfach 860329, D-8000 München 86(DE)

## Beschreibung

Die Erfindung betrifft ein Verfahren zur Mikroverkapselung von hydrophoben Öle mit darin gelösten Farbreaktionspartnern von Farbreaktionssystemen, wobei ein kationisiertes Melamin-Formaldehyd-Vorkondensat unter starkem Rühren aus seiner sauren wäßrigen Lösung durch Änderung der Löslichkeitsverhältnisse in feinster Suspension ausgefällt wird, diese Suspension unter starkem Rühren mit einem den Farbreaktionspartner gelöst enthaltenden hydrophoben Öl gemischt wird, die erhaltene Öl-in-Wasser-Dispersion sauer eingestellt und eine wäßrige Lösung eines wasserlöslichen nicht-ionogenen Melamin-Formaldehyd-Vorkondensats zur Ausbildung der Mikrokapselhülle unter Rühren hinzugefügt wird.

Es sind vielfältige Verfahren zur Mikroverkapselung von hydrophoben Ölen, insbesondere mit darin gelösten Farbbildnern von Reaktionsdurchschreibesystemen, bekannt. Die damit herstellbaren Mikrokapseln, die in der Regel eine ölige hydrophobe Lösung des Farbbildners (eine homogene Substanz) enthalten, werden im allgemeinen in üblicher Weise auf die Unterseite eines Papierblattes, dem CB-Blatt, aufgetragen. Dieses CB-Blatt kann mit einem sogenannten CF-Blatt in Kontakt stehen, bei dem die dem CB-Blatt zugewandte Oberfläche mit einem für den Farbbildner sauren Reaktionspartner beschichtet ist. Der saure Reaktionspartner kann z.B. ein säurebehandelter Ton, wie Montmorillonitton, oder auch ein niedrig-molekulares Phenolharz, wie ein Phenol-Formaldehyd-Novolak-Harz, sein. Handelt es sich bei dem sauren Reaktionspartner um eine in öligen hydrophoben Flüssigkeiten lösliche saure Verbindung, dann kann sie ebenfalls eingekapselt werden. Bei dem Druckvorgang werden die erwähnten Kapseln durch die Drucktypen zerschlagen. Dadurch treten die Reaktionspartner miteinander in Kontakt und liefern auf dem CF-Blatt ein farbiges Zeichen. Die beiden genannten Farbreaktionspartner können auch auf der Oberfläche eines einzigen Blattes aufgebracht werden, um ein sogenanntes autogenes System zu erhalten. Hier empfiehlt es sich, beide Reaktionspartner einzukapseln, sofern der saure Reaktionspartner in dem Öl löslich ist, um eine unerwünschte vorzeitige Reaktion der Reaktionspartner auszuschließen.

Zur Herstellung der Kapselhüllen von für Vervielfältigungszwecke in Farbreaktionssystemen vorgesehenen Mikrokapseln gibt es verschiedene Einkapselungsverfahren. Diese beruhen z. B. auf dem Einsatz von Gelatinekoazervat-, Polyisocyanat-, Polyamid- oder Aminoplast-Systemen. Das eingangs beschriebene Verfahren geht von einen Aminoplast-System aus, bei dem ein wasserlösliches nicht-ionogenes Melamin-Formaldehyd-Vorkondensat mit einem damit reaktionsfähigen wasserlöslichen Polymerisat unter Ausbildung der Kapselhülle umgesetzt wird. Dieses Verfahren hat in jüngster Zeit ansteigende Bedeutung erlangt. Es ist relativ leicht steuerbar und läuft unter vergleichsweise milden Reaktionsbedingungen ab, so daß selbst sehr empfindliche Farbbildner im Verlaufe der Reaktion unbeeinträchtigt bleiben.

Detailliert wird ein Verfahren der eingangs genannten Art in der EP-A 188 807 beschrieben. Dieses Verfahren führt zu einer besonders stabilen Öl-in-Wasser-Dispersion, indem die wäßrige Lösung eines kationaktiven Melamin-Formaldehyd-Vorkondensats und die eines organischen Polymerisats unter starkem Rühren zur Einstellung optimaler Turbulenzen und Ausschluß störender laminarer Verhältnisse gemischt werden. Hierdurch wird das ursprünglich gelöste kationisierte Melamin-Formaldehyd-Vorkondensat in feinster Suspension in Gegenwart eines wasserlöslichen Polymers ausgeschieden. Diese feinstsupendierten Teilchen führen zu einer besonders günstigen Stabilisierung der Öl-in-Wasser-Dispersion, in der durch Kondensationsreaktionen mit dem wasserlöslichen nicht-ionogenen Melamin-Formaldehyd-Vorkondensat als Hauptreaktionspartner die Kapselumhüllung gebildet wird.

Das in der EP-A 188 807 beschriebene Verfahren ist, wie bereits erwähnt, auf den Einsatz eines wasserlöslichen Polymerisats in der ersten Verfahrensstufe angewiesen, das mit dem kationisierten Melamin-Formaldehyd-Vorkondensat in eine Wechselwirkung tritt und hierdurch das Ausfällen dieses Melamin-Formaldehyd-Vorkondensats in feinster Suspendierung bewirkt. Es ist anzunehmen, daß diese Wechselwirkung auf die Anwesenheit geeigneter, insbesondere Zerewitinoff-aktive Wasserstoffatome tragender funktioneller Gruppen in dem Polymerisat zurückgeht. Derartige funktionelle Gruppen, die mit Melamin-Formaldehyd-Vorkondensaten in Reaktion treten, sind seit längerem bekannt. Hierzu zählen insbesondere Säure-, Amid-, Amino, Imino-, Ester-, Ether-, Hydroxyl-, Urethan-, Thiol- oder Mercaptan-Gruppen. Bevorzugte Beispiele für derartige Polymerisate sind Polyvinylalkohol, Gelatine und Maleinsäureanhydrid-Copolymere, insbesondere Ethylen/Maleinsäureanhydrid-Copolymerisate oder Styrol/Maleinsäureanhydrid-Copolymerisate. Besonders bevorzugt sind Acrylamid/Acrysäure-Copolymerisate, Stärke, Zellulosederivate, wie Carboxymethylzellulose (CMC) oder Hydroxyethylzellulose (HEC), Alginate, wie Natriumalginat, Polyurethane und Polyethylenoxid. Von ganz besonderem Vorteil hat sich bei diesen Verfahren als wasserlösliches organisches Polymerisat das Acrylamid/Acrylsäure-Copolymerisat erwiesen, das jedoch bei dem sich aus der EP-A 188 807 ergebenden Gesamtverfahren ein erheblicher Kostenfaktor ist.

Nach den Ausführungen der EP-A 188 807 kann auf das erwähnte wasserlösliche organische Polymerisat bei der Ausfällung des zuvor kationisierten Melamin-Formaldehyd-Vorkondensates nicht verzichtet werden. Überraschenderweise hat es sich jedoch gezeigt, daß auf dieses wasserlösliche Polymerisat dennoch verzichtet werden kann, wenn man ein in schwach saurem, neutralen und alkalischen Bereich wasserunlösliches kationaktives bzw. kationisierbares Melamin-Formaldehyd-Vorkondensat, das erst in einem erheblich angesäuerten wäßrigen Medium durch Protonisierung löslich ist, heranzieht und den pH-Wert dieses verhältnismäßig sauren wäßrigen Mediums durch Zugabe von

Brønsted-Basen unter starkem Rühren, bei dem sich optimale Turbulenzen unter Ausschluß störender laminarer Verhältnisse einstellen, soweit anhebt, daß dieses spezielle Melamin-Formaldehyd-Vorkondensat in feinster Suspendierung ausfällt.

Gegenstand der Erfindung ist demzufolge ein Verfahren der eingangs beschriebenen Art, das dadurch gekennzeichnet ist, daß zur Stabilisierung der Öl-in-Wasser-Dispersion der pH-Wert der sauren wäßrigen Lösung eines kationisierten Melamin-Formaldehyd-Vorkondensats, das im schwach sauren, neutralen und alkalischen wäßrigen Anwendungsbereich in unlöslicher, kationisierbarer Form vorliegt, in Abwesenheit wasserlöslicher organischer Polymerisate durch Zugabe von Brønsted-Basen unter starkem Rühren soweit angehoben wird, daß das kationisierbare Melamin-Formaldehyd-Vorkondensat aufgrund geänderter Löslichkeitsverhältnisse in feinster Suspension ausfällt.

Das Wesen des erfindungsgemäßen Verfahrens besteht demzufolge in dem Einsatz zweier unterschiedlicher Melamin-Formaldehyd-Vorkondensate, wovon das eine, nämlich das wasserunlösliche kationisierbare Melamin-Formaldehyd-Vorkondensat unter den beschriebenen Bedingungen in feinster Suspension ausgefällt wird und wobei diese suspendierten Teilchen die Ursache für die besondere Stabilisierung der späteren Öl-in-Wasser-Dispersion bzw. -Emulsion bilden. Die weiteren Ausgangsmaterialien sowie Verfahrensparameter können im Rahmen der bekannten Verfahrensweise auf der Grundlage der Kondensationsreaktion von Melamin-Formaldehyd-Vorkondensaten sowie insbesondere auf der Grundlage des sich aus der EP-A 188 807 ergebenden Verfahrens weitesten Schwankungen unterliegen. Die nachfolgende Beschreibung soll daher bezüglich der allgemein bekannten Verfahrensgrößen nur ein bevorzugtes Vorgehen umreißen.

Wichtig für das erfindungsgemäße Verfahren bzw. für die Stabilisierung der Öl-in-Wasser-Dispersion bzw. -Emulsion, in der sich die Kapselhülle der Mikrokapseln bildet, ist ein kationisierbares Melamin-Formaldehyd-Vorkondensat, das sich in dem noch näher zu beschreibenden Anwendungskonzentrationsbereich nicht in Wasser lösen läßt. Es handelt sich also um ein kationisierbares Melamin-Formaldehyd-Vorkondensat, das im neutralen pH-Bereich und darüber, insbesondere bei einem pH-Wert von etwa 5 und mehr in Wasser nicht löslich ist, so daß man ohne weiteres von "wasserunlöslich" sprechen kann. Dabei ist dieser Begriff "wasserunlöslich" für den Fachmann zur praktischen Verwirklichung der vorliegenden Erfindung ohne weiteres ausreichend. Derselbe Begriff oder vergleichbare Begriffe werden in einschlägigen Chemie-Nachschlagewerken benutzt, so nicht nur "wasserunlöslich", sondern auch "leicht wasserlöslich" und dergleichen, was sich beispielsweise aus der Literaturstelle D'Ans Lax, "Taschenbuch für Chemiker und Physiker", Bd II, Org. Verbindungen, 1964, S. 2–57 ergibt.

Um das für die Zwecke der Erfindung einzusetzende wasserunlösliche kationisierbare Melamin-Formaldehyd-Vorkondensat zu lösen und dabei in seine kationisierte bzw. protonisierte lösliche Form zu überführen, wird es vorzugsweise in eine relativ stark saure Lösung eingebracht, so in eine Lösung eines pH-Wertes von etwa 3,5 und weniger. Bei diesem pH-Wert und weniger ist seine Lösung auch langzeitig beständig. Wird der pH-Wert auf etwa 3,5 bis 4,5 angehoben, dann geht die Beständigkeit zurück, da die elektrostatische Abstoßung durch den Abzug von Protonen mehr und mehr aufgehoben wird und eine Eigenkondensation einsetzt. Wird der pH-Wert auf etwa 4,5, insbesondere etwa 5,0 und mehr angehoben, dann führt dies zu einer praktisch quantitativen Ausfällung des wasserunlöslichen kationisierbaren Melamin-Formaldehyd-Vorkondensats. Im Rahmen der Erfindung wird die Anhebung des pH-Wertes zweckmäßigerweise möglichst schnell durchgeführt, damit das ursprünglich gelöste kationisierte Melamin-Formaldehyd-Vorkondensat möglichst ohne Eigenkondensation ausgefällt wird. Dabei werden übliche Brønsted-Basen herangezogen.

Es hat sich überraschenderweise gezeigt, daß mit Hilfe eines Alterungsprozesses der sauren wäßrigen Lösung des kationisierten Melamin-Formaldehyd-Vorkondensats ein hervorragender Steuermechanismus für den Öltropfen- bzw. Kapseldurchmesser gegeben ist. Verwendet man ungealterte, frisch hergestellte Lösungen zur Ausbildung der die Emulsion stabilisierenden Ausfällung, so erhält man Kapseln mit einem relativ kleinen Durchmesser. Umgekehrt resultieren Kapseln mit einem deutlich größeren Durchmesser, wenn der die Emulsion stabilisierende Ausfällungsprozeß mit einer über mehrere Stunden gealterten Lösung des kationisierten Melamin-Formaldehyd-Vorkondensats durchgeführt wird.

Wenn im Rahmen der Erfindung von "Brønsted-Basen" gesprochen wird, so gilt hier der übliche definitionsgemäße Begriff. Es handelt sich also um Verbindungen, die imstande sind, durch Anlagung von Protonen den pH-Wert zur Ausfällung des erwähnten Melamin-Formaldehyd-Vorkondensates ausreichend weit anzuheben. Als Brønsted-Basen kommen nahezu sämtliche bekannten Basen in Betracht, wobei selbstverständlich solche Brønsted-Basen ausscheiden, die die Kapselwandbildungsmechanismen beeinträchtigen. Ganz besonders vorteilhaft haben sich die üblichen wäßrigen Lösungen von Basen erwiesen, insbesondere die wäßrige Lösung von Natriumhydroxid oder Kaliumhydroxid.

Die Ausfällung des speziellen wasserunlöslichen, zuvor kationisierten Melamin-Formaldehyd-Vorkondensats ist für die Zwecke der Erfindung allein nicht ausreichend. Vielmehr muß diese Ausfällung unter starkem Rühren erfolgen. Was unter einem "starken Rühren" zu verstehen ist, wurde bereits vorstehend bei der Erörterung des Standes der Technik nach der EP-A 188 807 angesprochen. Detaillierte Ausführungen folgen später. Durch das starke Rühren wird gewährleistet, daß das kationisierbare Melamin-Formaldehyd-Vorkondensat in feinster Suspension ausfällt. Nur in dieser feinstsuspendierten Form ist das Ausfällungsprodukt geeignet, die Dispersionsstabilisierung im späteren Verfahrensablauf zu bewirken.

Durch das beschriebene Vorgehen, d.h. durch die rasche pH-Wertanhebung unter starkem Rühren, fällt das ursprünglich im saurem Medium gelöste Melamin-Formaldehyd-Vorkondensat nunmehr neutral aus. Seine Teilchengröße liegt bei optimaler Gestaltung des erfindungsgemäßen Verfahrens zwischen etwa 0,1 und 1,5 Mikrometern. Liegen die ausgefällten Melamin-Formaldehyd-Vorkondensat-Partikel in diesem Teilchengrößenbereich, dann bewirken sie im weiteren Verfahrensablauf eine besonders starke Stabilisierung der Emulsion, die nach Zugabe der hydrophoben Lösung des Farbbildners bzw. eines anderen Reaktionspartners erhalten wird. Besonders gut hat sich bei der Durchführung der Erfindung zur Erzielung der angestrebten Emulsionsstabilisierung das unter der Bezeichnung Madurit MW 150® vertriebene Melamin-Formaldehyd-Vorkondensat erwiesen.

An das nicht-ionogene Melamin-Formaldehyd-Vorkondensat sind verschiedene Anforderungen zu stellen. Zunächst muß es wasserlöslich sein. Ferner muß es eine herabgesetzte Eigenreaktionsfähigkeit aufweisen. Die Herabsetzung der Reaktivität läßt sich durch zumindest partielle Blockierung der aktiven Methylolgruppen erreichen. Hierzu geeignete Verfahren sind bekannt (vgl. Kunststoffhandbuch, Bd. X, Duroplaste, S. 173). So kann die gewünschte Reaktivität des nicht-ionogenen (oligomeren) Melamin-Formaldehyd-Vorkondensats durch partielle Methylierung eingestellt werden. In der europäischen Patentschrift 0 026 914 wird ein solches Produkt beschrieben, das z. B. pro Mol Melamin 5,25 Mole Formaldehyd und 2,3 Mole Methylethergruppen enthält. Diesen Anforderungen genügen im wesentlichen die Handelsprodukte Madurit MW 112® der Firma Cassella AG (vgl. hierzu "Kunstharze Hoechst, Technisches Merkblatt", Ausgabe September 1982), BC 336® der BIP Chemicals Limited und Resin 42 - 91® der Rousselot GmbH.

Durch die Herabsetzung der Reaktionsfähigkeit des nicht-ionogenen Melamin-Formaldehyd-Vorkondensat wird so gewährleistet, daß der Einkapselungsvorgang nicht zu schnell abläuft. Damit wird eine unerwünschte Agglomeratbildung bzw. das Ausflocken größerer Teilchen zurückgedrängt oder sogar vermieden. Agglomerate bzw. größere Teilchen führen beim späteren Druckvorgang mit dem entsprechend hergestellten Druckpapier zu nachteiligen Erscheinungen, so zu einer undeutlichen Schrift. Nicht-ionogene methylierte Melamin-Formaldehyd-Vorkondensate des erwähnten Methylierungsgrades besitzen im allgemeinen die wünschenswerte Reaktivität und werden daher im Rahmen der Erfindung bevorzugt. Es lassen sich für die Zwecke der Erfindung aber auch Mischungen unterschiedlich reaktiver nicht-ionogener Melamin-Formaldehyd-Vorkondensate verwenden. In Einzelfällen kann es von Vorteil sein, die Reaktivität des zur Verfügung stehenden nicht-ionogenen Melamin-Formaldehyd-Vorkondensates zu steuern, was durch Zugabe von Formaldehyd geschehen kann.

Die Anwendungskonzentration der wäßrigen Lösung der nicht-ionogenen Melamin-Formaldehyd-Vorkondensate liegt vorzugsweise bei der hohen Konzentration von etwa 20 bis 40 Gew.-0%, insbesondere etwa 30 Gew.-%.

Das im Rahmen der Erfindung eingesetzte spezielle wasserunlösliche kationaktive bzw. kationisierbare Melamin-Formaldehyd-Vorkondensat unterscheidet sich, wie die vorstehenden Ausführungen zeigen, grundsätzlich von dem nicht-ionogenen Melamin-Formaldehyd-Vorkondensat hinsichtlich der Funktion bei der Verfahrensdurchführung. Das wasserunlösliche kationisierbare Melamin-Formaldehyd-Vorkondensat dient in ausgefällter Form vorwiegend der Emulsionsstabilisierung, während das letztere die Kapselwand aufbaut. Während bei dem nicht-ionogenen Melamin-Formaldehyd-Vorkondensat die Reaktivität beispielsweise durch Methylierung auf ein optimales Maß herabgesetzt wird, ist sie bei dem kationisierbaren Melamin-Formaldehyd-Vorkondensat vergleichsweise hoch. Die aktiven Methyolgruppen des kationaktiven Melamin-Formaldehyd-Vorkondensats haben somit vorzugsweise ihre volle Reaktivität und sind nicht blockiert, z. B. durch Methylierung. Bevorzugt ist es daher weitgehend frei von Methyloläthergruppen, d. h. es ist möglichst nicht partiell methyliert etc.

Die Konzentration des kationisierbaren Melamin-Formaldehyd-Vorkondensats in wäßriger Lösung liegt bei üblichen Handelsprodukten im allgemeinen in dem Bereich von etwa 2 bis 12 Gew.-%, wobei ein Wert von etwa 4 bis 8 Gew.-%, insbesondere etwa 8 Gew.-%, bevorzugt wird. Deren pH-Wert liegt, wie bereits angesprochen, bei vorzugsweise etwa 1,5 bis 3,0. Die Lösung enthält dabei beispielsweise etwa 1 bis 10 % Säuren (wie z. B. Ameisen-, Salz-, Schwefel- oder Phosphorsäure).

Das hydrophobe Öl, in dem der Farbbildner oder dessen saurer Reaktionspartner, sofern es sich hier um eine lösliche Verbindung (z. B. eine phenolische Verbindung) handelt, gelöst sind, stellt ein hydrophobes Material dar, das gegenüber Wasser inert ist, d.h. es ist in Wasser praktisch unlöslich bzw. damit nicht mischbar. Eine geringe Löslichkeit ist vernachlässigbar. Bevorzugte Beispiele von Ölen, die erfindungsgemäß als Lösungsmittel der Farbreaktionspartner herangezogen werden können, sind insbesondere teilweise hydrierte Terphenyle, Chlorparaffine, alkylierte Biphenyle, Alkylnaphthaline, Diarylmethanderivate, Dibenzylbenzolderivate, Alkane, Cycloalkane und Ester, wie Phthalate, Adipate, Trimellitate und Phosphate.

Zum Auflösen in den hydrophoben Ölen und zur Einkapselung kommen vielfältige Farbbildner, die in der Fachliteratur detailliert beschrieben werden, in Frage. Beispiele hierfür sind: Lacton-, Phthalid-, Fluoran-, Diphenylamin-, Spiropyran-, Auramin-, Phenothiazin-, Aminophenylpyridin- und Amino-diazaxanthenlacton-Derivate, insbesondere Kristallviolettlakton und N-Benzoylleukomethylenblau.

Es hat sich bei der Ausübung der Erfindung gezeigt, daß diese zu besonders günstigen Kapseln führt, wenn eine wasserlösliche makromolekulare Substanz nach der Ausbildung der Suspension des ausgefällten kationaktiven Melamin-Formaldehyd-Vorkondensats hinzugegeben wird. Diese Zugabe sollte spätestens mit der beginnenden Ausbildung des Wandmaterials abgeschlossen sein. Der Begriff "wasserlösliche makromolekulare Substanz" orientiert sich hierbei an der dem Fachmann geläufigen Definition. Bei dieser makromolekularen Substanz kann es sich demzufolge auch um das wasserlösliche organische Polymerisat handeln, das bereits vorstehend im Zusammenhang mit der Erörterung EP-A 188 807 beschrieben wurde.

Die Funktion der wasserlöslichen makromolekularen Substanz besteht darin, daß eine in Einzelfällen auftretende und unerwünschte Agglomerierung der gebildeten Mikrokapseln ausgeschlossen wird. Als wasserlösliche makromolekulare Substanzen, die diese Funktion erfüllen, kommen insbesondere auch anorganische makromolekulare Verbindungen, wie beispielsweise wasserlösliche Polyphoshate, in Frage. Werden die aus der EP-A 188 807 ersichtlichen wasserlöslichen organischen Polymerisate im Hinblick auf die Ausklammerung der Agglomeratbildung nach der Ausbildung der erwähnten stabilisierend wirkenden Suspension herangezogen, dann ist hierzu, was wirtschaftlich von großem Vorteil ist, lediglich noch eine vergleichsweise niedrige Menge erforderlich. So entfallen dann beispielsweise vorzugsweise nur etwa 0,5 Gewichtsteile dieser Verbindungsgruppe auf etwa 0,05 bis 1,5 Gewichtsteile wasserunlösliches kationisierbares Melamin-Formaldehyd-Vorkondensat, was auch für die weiteren in Frage kommenden makromolekularen Substanzen gilt. Somit handelt es sich um eine beträchtlich niedrigere Menge als diejenige, die bei dem Verfahren nach der EP-A 188 807 bereits in der ersten Verfahrensstufe der Bildung der Suspension des ausgefällten kationisierbaren Melamin-Formaldehyd-Vorkondensats eingesetzt wird. Die Zugabe der organischen makromolekularen Verbindungen wird im Rahmen der Erfindung in der ersten Verfahrensstufe (Suspensionsbildung) ausgeschlossen, da sie bereits in der EP-A 188 807 angesprochen wird, wenn auch nicht im Hiblick auf die Agglomeratbildung, sondern als notwendige Maßnahme zur Ausfällung des kationisierbaren Melamin-Formaldehyd-Vorkondensats.

Die erwähnten, jedoch nicht zwingend notwendigen wasserlöslichen makromolekularen Substanzen werden beispielsweise in einer etwa 2 bis 15 gew.-%igen wäßrigen Lösung eingesetzt, wobei der Bereich von etwa 5 bis 7 Gew.-% ganz besonders bevorzugt ist. Dies kann durch normales Einrühren erfolgen. Die genannten Konzentrationen sind von dem Typ des eingesetzten Materials abhängig und können demzufolge entsprechend schwanken.

Die zuletzt genannten Konzentrationen gelten insbesondere für ein Acrylsäure-Acrylamid-Copolymerisat (bestehend aus etwa 20 bis 50 % Acrylsäure und etwa 80 bis 50 % Acrylamid des Molekulargewichts von etwa 200 000 bis 800 000). Hervorragende Ergebnisse im Hinblick auf die Lagerstabilität und Migrationsfestigkeit der erhaltenen Mikrokapseln werden mit einem wasserlöslichen Mischpolymerisat aus ca. 30 % Acrylsäure- und ca. 70 % Acrylamidgruppen eines mittleren Molekulargewichts von ca. 400 000 erhalten. Gegen zu hohe Konzentrationen des wasserlöslichen Polymerisats können damit verbundene Viskositätsprobleme sprechen. Diese können allerdings auch dann wieder trotz einer relativ hohen Konzentration zurückstehen, wenn das jeweilige Polymerisat ein vergleichsweise niedriges Molekulargewicht aufweist. Hieraus ergibt es sich, daß für in der Praxis bewährte wasserlösliche organische Polymerisate die jeweilige optimale Konzentration im Hinblick auf die verschiedenen Anforderungen im Rahmen einfacher Vorversuche ermittelt werden sollte.

Die Gewichtsverhältnisse, in denen die zwei zwingend einzusetzenden wäßrigen Lösungen der beiden unterschiedlichen Melamin-Formaldehyd-Vorkondensate bei der Durchführung des erfindungsgemäßen Verfahrens eingesetzt werden, sind nicht kritisch. Diese Verhältnisse können weiten Schwankungen unterliegen. Der Fachmann kann die optimalen Verhältnisse in Abhängigkeit von der Art der eingesetzten Materialien und ihrer Konzentration in dem jeweiligen wäßrigen Medium im Rahmen geeigneter Vorversuche ohne großen Aufwand ermitteln. Aus den nachfolgenden Beispielen lassen sich praxisgerechte Verhältnisse ermitteln, wonach vorzugsweise etwa 1 Gewichtsteil einer etwa 16 gew.-%igen wäßrigen sauren Lösung des kationisierten Melamin-Formaldehyd-Vorkondensates auf etwa 2 Gewichtsteile einer etwa 32 gew.-%igen wäßrigen Lösung des nicht-ionogenen Melamin-Formaldehyd-Harzes entfallen, wobei diese vorzugsweise zusätzlich etwa 6,5 Gewichtsteile einer etwa 4,5 %igen wäßrigen Lösung der makromolekularen Substanz enthält. Bei der bevorzugten Ausgestaltung des erfindungsgemäßen Verfahrens, bei dem eine wasserlösliche makromolekulare Substanz in den erwähnten Verfahrensstadien herangezogen wird, liegt das bevorzugte Gewichtsverhältnis von wasserlöslicher makromolekularer Substanz zu dem nicht-ionogenen Melamin-Formaldehyd-Vorkondensat zweckmäßigerweise in dem Bereich von etwa 0,003:10 bis 3:1.

Die vorstehend ausgeführten Erläuterungen zum Reaktionsablauf, auf dem das erfindungsgemäße Verfahren beruht, basieren auf allgemeinen Lehren der Animoplast-Chemie, die dem Fachmann geläufig sind.

Für eine erfolgreiche Durchführung des erfindungsgemäßen Verfahrens ist es wesentlich, daß bei der Ausfällung des kationisierten Melamin-Formaldehyd-Vorkondensats aus der sauren wäßrigen Ausgangslösung durch pH-Wertanhebung sowie auch beim Vermischen dieses Mediums mit dem den Farbreaktionspartner gelöst enthaltenden hydrophoben Öl unter starkem Rühren gearbeitet wird. Es muß demzufolge mit einem hochwirksamen Dispergiergerät gerührt bzw. gemischt werden, um optimale Turbulenzen unter Ausschluß laminarer Verhältnisse einzustellen. Geeignete Aussagen über die Turbulenz macht die Reynolds-Zahl, die vorzugsweise über etwa 10.000 liegen sollte. In der Praxis haben sich solche Hochleistungsdispergiergeräte für die Zwecke der Erfindung als besonders vorteilhaft erwiesen, die auf dem Stator/Rotorsystem beruhen. Dieses System weist Statorplatten und Rotorscheiben auf und wirkt auch wie eine Zentrifugalturbine.

Bei einem der bevorzugten Dispergiergeräte obigen Typs besteht folgende Konstruktion: Die Statorplatten haben Lochkreise, durch deren Löcher das Mischgut in axialer Richtung hindurchströmt. Diese Löcher liegen vertieft in symmetrisch auf beiden Seiten der Statorplatte angeordneten ringförmigen Kanälen. Die Flanken dieser Kanäle sind mit einer speziell ausgebildeten Verzahnung versehen. In den Kanälen laufen die gleichfalls ringförmig angeordneten Scherstifte der Rotorscheiben. Die vom Mischgut durchströmten Scherfelder werden abwechselnd zum einen von den verzahnten Flanken der Statorkanäle mit den Längskanten der Rotorstifte und zum anderen von der Stirnfläche der Rotorstifte mit den Lochkanten der Statorkanäle gebildet. Unter Entstehung intensiver Prall-, Reib- und Schereffekte hoher Frequenz wird das Mischgut ständig in eine Vielzahl von Einzelströmen aufgelöst und wieder gebündelt. Derartige Multifrequenz-Flüssigmischer haben bei kurzen Verweilzeiten eine hohe Mischleistung und gewährleisten das exakte Einmischen kleiner Stoffzugaben. Unter Vermeidung schädlicher Todräume ist das Eigenvolumen sehr niedrig gehalten. Hohe Impulswerte und ein starker mechanischer Effekt bewirken auch ohne überhöhte Drehzahlen eine Feindispergierung des Gutes. Große Kontaktflächen in den Mischkammern gewährleisten eine innigste Berührung der verschiedenen Komponenten.

Des weiteren gibt es jedoch auch Hochleistungsdispergiergeräte, die sich für den chargenweisen Betrieb eignen und die ebenfalls auf den oben detailliert geschilderten Stator-/Rotorsystem beruhen. Hier wird das eine zu vermischende Medium vorgegeben, mit diesem Hochleistungsdispergiergerät gerührt und die hinzuzumischende flüssige Komponente in den sich durch den Betrieb dieses Hochleistungsdispergiergerätes ausbildenden Flüssigkeitskegel eingegeben. Im Bruchteil einer Sekunde wird die Mischstelle durch die vorliegenden Strömungsverhältnisse in die Turbulenzzone innerhalb des Hochleistungsdispergiergerätes gezogen und dort die angestrebte Dispergierung vorgenommen.

Die oben geschilderten Hochleistungsdispergiergeräte sollen nur als bevorzugte Beispiele gewertet werden. Selbstverständlich kommen für die Zwecke der Erfindung auch andere Hochleistungsdispergiergeräte, die auf einem anderen Prinzip beruhen, in Frage, sofern sie das gleiche angestrebte Dispergierergebnis erreichen lassen. Es ist also wichtig, daß solche Dispergiergeräte eingesetzt werden, die ausreichend hohe Scherkräfte entwickeln, um die erforderliche optimale Turbulenz unter weitgehendem Ausschluß laminarer Strömungsverhältnisse zu ermöglichen. Dies ist auch mit neuerdings entwickelten Dispergiergeräten möglich, bei denen Hochdruckwirkungen in Verbindung mit Kavitationswirkungen zum Tragen kommen.

Im einzelnen wird bei der Durchführung des erfindungsgemäßen Verfahrens unter Heranziehen der obengenannten Ausgangsmaterialien vorzugsweise wie folgt vorgegangen: eine etwa 5 bis 20, vorzugsweise etwa 6 gew.-%ige saure (pH-Wert etwa 2,5) wäßrige Lösung des kationisierten Melamin-Formaldehyd-Vorkondensats wird in einem Hochleistungsdispergiergerät unter starkem Rühren mit einer solchen Menge einer etwa in wäßrigen Natriumhydroxidlösung unter starkem Rühren gemischt, daß der pH-Wert der anfallenden wäßrigen Mischung auf mehr als etwa 4,5, insbesondere etwa 5,0 bis 7,0 angehoben wird. Hierbei fällt neutrales (kationisierbares) Melamin-Formaldehyd-Vorkondensat in feinster Teilchengröße von etwa 0,1 bis 1,5 Mikrometern aus. Der gesamte Misch- und Ausfällungsvorgang liegt im Bruchteil einer Sekunde bzw. vollzieht sich momentan. Die Ausfällung tritt als Trübung in Erscheinung, wobei diese je nach Teilchendurchmesser von kolloidal bis mikroskopisch erkennbar reichen kann. Es kann sich nun unmittelbar, ebenfalls unter starkem Rühren mit einem Hochleistungsdispergiergerät der obengenannten Art, die Zumischung der hydrophoben Ölphase, die den Farbreaktionspartner gelöst enthält, anschließen.

Der anzustrebende Öltröpfchendurchmesser sollte zwischen 2 und 10 Mikrometern, bevorzugt zwischen 4 und 6 Mikrometern liegen. Dieser Öltröpfchendurchmesser begünstigt ein gleichmäßiges Verhalten der mittels der gewonnenen Mikrokapseln hergestellten Farbreaktionssysteme, insbesondere der Farbreaktionsschreibpapiere. Das jeweils gewählte Verhältnis von Ölphase zu dem Feststoffanteil der wässrigen Phase ist nicht kritisch. In der Regel liegt dieses Gewichtsverhältnis in dem Bereich von etwa 2:1 bis 20:1, insbesondere etwa 5:1 bis 10:1.

Nach oder vor dem Zumischen der Ölphase wird die Mischung bzw. die Öl-in-Wasser-Dispersion im Hinblick auf die bei der späteren Bildung der Kapselhülle ablaufenden Kondensationsreaktion, die durch Säuren katalysiert wird, sauer eingestellt. Hierzu können anorganische oder organische Säuren herangezogen werden, sofern sie ausreichende Azidität aufweisen und zu keinen störenden Nebeneffekten Anlaß geben, insbesondere den in dem hydrophoben Öl gelösten Farbbildner nicht nachteilig beeinflussen. So werden vorzugsweise Essigsäure, Ameisensäure, Zitronensäure, Salzsäure oder auch Schwefelsäure verwendet. Der für die Kondensationsreaktion optimale pH-Wert liegt im allgemeinen im schwach sauren Bereich, insbesondere zwischen 3 und 6. Bevorzugt wird der Bereich von 3,5 bis 5. Zu hohe pH-Werte verlängern die Reaktionszeit, während zu niedrige pH-Werte unter verschiedenen Gesichtspunkten nachteilig sind, so zu einem zumindest geringfügigen unerwünschten Auflösen des ausgefällten kationisierbaren Melamin-Formaldehyd-Vorkondensats führen können. Ein zu niedriger pH-Wert kann des weiteren auch zu einer unerwünschten frühzeitigen Verfärbung des Farbbildners in der Mikrokapsel führen. Ferner kann die Kondensationsreaktion auch zu schnell ablaufen, so daß sich die nachteilige Agglomeratbildung bzw. die Ausbildung größerer Teilchen einstellt.

In die in obiger Weise zubereitete Mischung wird nun die wässrige Lösung des nicht-ionogenen Melamin-Formaldehyd-Vorkondensates eingerührt. Hierfür sind übliche bekannte Rühreinrichtungen geeignet, die keine besonderen Rühr- bzw. Turbulenzwirkungen entfalten. Die erwähnten Hochleistungsdispergiergeräte dürfen hier nicht herangezogen werden, da sie die Ausbildung der Kapselhülle durch die Kondensationsreaktion des nicht-ionogenen Melamin-Formaldehyd-Vorkondensats gegebenenfalls unter Einbeziehung einer wasserlöslichen makromolekularen Substanz, stören würden.

Die oben detailliert besprochenen Ausgangsmaterilien finden sich schließlich in Form einer reaktionsfähigen Öl-in-Wasser-Dispersion bzw. -Emulsion, in der unter normalem Rühren während etwa 1 bis 5 Stunden, insbesondere etwa 2 bis 3 Stunden die Bildung der Kapselhülle der Mikrokapseln erfolgt. Diese Öl-in-Wasser-Dispersion bzw. -Emulsion ist vollkommen stabil, was auf das darin in feinster Suspension vorliegende kationaktive Melamin-Formaldehyd-Vorkondensat der beschriebenen Art zurückgeht.

Da die erwähnten Kondensationsreaktionen, die zur Ausbildung der Mikrokapselwand führen, unter Wärmezufuhr beschleunigt ablaufen, kann es wünschenswert sein, die Temperatur der einzelnen Verfahrensstufen zu steuern bzw. einzuregeln, beispielsweise durch Erwärmen.

Nach der Bildung des Reaktionsmediums wird dessen Temperatur im allgemeinen zunächst auf etwa 55° C gesteigert, um die Kondensationsreaktion und damit die Bildung der Wandung der Mikrokapseln zu optimieren. Dieser Vorgang ist im allgemeinen nach einer zweistündigen Reaktion bei etwa 55°C, bei den obengenannten bevorzugten Bereichen des pH-Wertes, annähernd abgeschlossen. Bei einer Temperatur von weniger als etwa 55° C erhält man regelmäßig dennoch qualitativ zufriedenstellende Mikrokapseln, wobei allerdings, wie bereits ausgeführt, eine längere Reaktionsdauer erforderlich ist. Es läßt sich auch bei Temperaturen arbeiten, die unter oder auch über 55° C liegen. Im Rahmen einfacher Routineversuche kann die besonders günstige Reaktionstemperatur für den jeweiligen Einzelfall ohne weiteres ermittelt werden.

Dem Reaktionsmedium können auch verschiedene Additive beifügt werden, so beispielsweise ein Ammoniumsalz, wie Ammoniumchlorid, das die Kondensationsreaktion in einigen Fällen beschleunigt.

Wenn die Kondensationsreaktion in dem gewünschten Ausmaß abgelaufen ist, wird der pH-Wert durch Zugabe von Alkalien, insbesondere von Natriumhydroxid, Kaliumhydroxid oder Ammoniumhydroxid, neutral oder schwach alkalisch eingestellt. Hierdurch wird eine weitere Reaktion weitgehend ausgeschlossen, die bei der Lagerung der Mikrokapseln zu einer Agglomeratbildung führen könnte. Auch wird der Korrosionseinfluß des sauren Mediums auf die Reaktionsgefäße behoben. Bei Verwendung von Ammoniumhydroxid wird vorhandener freier Formaldehyd als geruchlose Additionsverbindung aus dem Reaktionssystem weitgehend entfernt.

Das erfindungsgemäße Verfahren kann chargenweise, aber auch kontinuierlich geführt werden. Bei dem kontinuierlichen Vorgehen wird beispielsweise die mit einem Hochleistungsdisperiergerät durch

Vermischen der sauren wäßrigen Lösung des wasserunlöslichen kationaktiven Melamin-Formaldehyd-Vorkondensats und der wäßrigen Lösung der Brønsted-Base, insbesondere wäßriger Natronlauge, erhaltene Suspension unmittelbar im Anschluß mittels eines weiteren Hochleistungsdispergiergerätes mit der den Farbreaktionspartner enthaltenden Ölphase gemischt und danach in eine Rührkesselkaskade, in der die Kondensationsreaktion abläuft, geleitet, wobei in dem ersten Rührkessel die wäßrige Lösung des nicht-ionogenen Melamin-Formaldehyd-Vorkondensates zudosiert werden kann. In der Praxis bietet es sich auch an, die Reaktionsmischung zunächst in einen größeren Endrührkessel einzuleiten. Sobald dieser Kessel gefüllt ist, wird das frische Reaktionsmedium in einen zweiten Rührkessel geleitet, während die Reaktion in dem ersten Rührkessel zum Abschluß gebracht wird. Die fertige Kapseldispersion wird entnommen. Anschließend kann wieder frisches Reaktionsmedium zugeleitet werden, während die Kapselbildungsreaktion in dem zweiten Rührkessel abläuft. Dieses kontinuierliche Verfahren soll nur als ein Beispiel angesehen werden, das ersichtlich vielfältige Modifikationen erfahren kann.

Die besonderen Vorteile des erfindungsgemäßen Verfahrens bestehen darin, daß neben der außergewöhnlich günstigen Stabilisierung des Reaktionssystems, die auf die in feinster Suspension im Reaktionsmedium enthaltenen ausgefällten wasserunlöslichen kationisierbaren Melamin-Formaldehyd-Vorkondensate zurückgehen, die wünschenswerten Eigenschaften der Mikrokapseln erhalten bleiben. Diese zeigen eine hoch zufriedenstellende Dichtigkeit, was sich durch übliche Tests nachweisen läßt. Für die vorteilhafte Stabilisierung des Reaktionsmediums ist es nicht nötig, teure makromolekulare Substanzen, insbesondere teure wasserlösliche organische Polymerisate, heranzuziehen. Dies ist ein wesentlicher wirtschaftlicher Vorteil. In Einzelfällen ist es zweckmäßig eine reduzierte Menge an wasserlöslicher makromolekularer Substanz in einem geeigneten Verfahrensstadium (unter Ausschluß der Zugabe wasserlöslicher organischer Polymerisate in der ersten Verfahrensstufe) hinzuzugeben, um eine mögliche unerwünschte Agglomeratbildung weitestgehend auszuschließen. Aufgrund der Reduzierung der eingesetzen Menge dieser zusätzlichen Substanzen im Hinblick auf die bei dem Verfahren nach der EP-A 188 807 nötigen höheren Mengen, erweist sich das erfindungsgemäße Verfahren auch in diesem Falle von wirtschaftlichem Nutzen. Die erfindungsgemäß erhaltene Kapseldispersion kann aufgrund seiner vorzüglichen Eigenschaften direkt auf saurem Nehmerpapiere aufgetragen werden, ohne daß sich unerwünschte Verfärbungen zeigen. Das erfindungsgemäße Verfahren läßt sich des weiteren einfach und sicher steueren. Die dispersion- bzw. emulsionsstabilisierende Wirkung tritt innerhalb von Bruchteilen von Sekunden ein.

Die Erfindung soll nachfolgend anhand eines Beispiels noch näher erläutert werden.

Beispiel 1

50 Gewichtsteile einer sauren wäßrigen Lösung, die 6 Gewichtsteile kationisiertes Melamin-Formaldehyd-Vorkondensat und 1,5 Gewichtsteile Ameisensäuren enthält und einen pH-Wert von 2,5 aufweist, werden sofort nach der Herstellung unter starkem Rühren mittels eines auf dem Rotor-/Stator-Prinzip beruhenden Hochleistungsdispergiergerätes mit 200 g einer 0,5 %igen Natronlauge gemischt, wobei der pH-Wert auf 5,5 angehoben wird, was zu quantitativen Ausfällung des kationisierbaren Melamin-Formaldehyd-Vorkondensats führt, wodurch eine trübe Suspension entsteht. Hierzu wird unter starkem Rühren mittels eines Hochleistungsdispergiergerätes die Lösung des Farbbildnergemisches in einer Mischung aus 90 Gewichtsteilen Chlorparaffin (Chlorgehalt 42 %, mittlere Kohlenstoffzahl 17) und 90 Gewichtsteilen Dodecylbenzol (Verschnittmittel) gegeben. Der Farbbildner besteht aus 3,8 Gewichtsteilen Kristallviolettlakton (Primärfarbbildner) und 1 Gewichtsteil N-Benzoylleukomethylenblau (Sekundärfarbbildner). Es schließt sich unter normalem Rühren die Zugabe von 26 Gew.-Teilen einer 20 gew.-%igen wäßrigen Lösung von Ameisensäure an, um den pH-Wert des Systems auf 4,2 einzustellen. Darauf wird unter normalem Rühren die Lösung von 50 Gew.-Teilen nicht-ionogenen Melamin-Formaldehyd-Vorkondensats (Madurit MW 112®) in 50 Gew.-Teilen Wasser eingemischt. Die Mischung, die sich auf Raumtemperatur befindet, wird nun langsam auf eine Temperatur von etwa 55° C erwärmt. Dieses System wird etwa 3 Stunden in Reaktion gehalten. Danach erfolgt ein Abkühlen auf Raumtemperatur. Es schließt sich die Einstellung des pH-Wertes auf etwa 9 durch Zugabe von wässriger konzentrierter Ammoniaklösung (25 Gew.-%) an. Hierdurch wird gleichzeitig überschüssiger Formaldehyd gebunden. Es werden Kapseln einer mittleren Teilchengröße von etwa 4 bis 7 Mikrometer hoher Dichtigkeit und ohne Agglomeratbildung gewonnen. Sie führen bei Verwendung in Reaktionsdurchschreibepapieren zu ausgezeichneten Schriftzeichen.

Beispiel 2

Das Beispiel 1 wird mit der Abänderung wiederholt, daß nach Bildung der Emulsion 60 g einer 20 %igen Lösung eines wasserlöslichen Polymers vom Typ eines Acrylsäure-Acrylamid-Copolymerisats (bestehend aus etwa 30 % Acrylsäure und etwa 17 % Acrylamid) eingemischt werden. Diese zusätzliche Maßnahme führt dazu, daß es stets gewährleistet ist, daß keinerlei Agglomeratbildung auftritt, die bei verschiedenen Reaktionsdurchschreibenpapieren nachteilig sind.

Beispiel 3

Beispiel 1 wird mit der Abänderung wiederholt, daß nach Bildung der Emulsion 20 g einer 20 %igen Lösung eines wasserlöslichen Polymeren vom Typ Acrylamid/Natriumstyrolsufonat zugegeben wird.

Beispiel 4

50 Gewichtsteile einer sauren wäßrigen Lösung, die 3 Gewichtsteile kationisiertes Melamin-Formaldehyd-Vorkondensat-Harz und 1 Gewichtsteil Ameisensäure enthält, werden während 3 Stunden bei Raumtemperatur gerührt und anschließend wie in Beispiel 1 beschrieben weiterverarbeitet. Der mittlere Teilchendurchmesser der erhaltenen Kapseln liegt zwischen 5 und 10 Mikron.

**Patentansprüche**

1. Verfahren zur Mikroverkapselung hydrophoben Ölen mit darin gelösten Farbreaktionspartnern von Farbreaktionssystemen, wobei ein kationisiertes Melamin-Formaldehyd-Vorkondensat unter starkem Rühren aus seiner sauren wäßrigen Lösung durch Änderung der Löslichkeitsverhältnisse in feinster Suspension ausgefällt wird, diese Suspension unter starkem Rühren mit einem den Farbreaktionspartner gelöst enthaltenden hydrophoben Öl gemischt wird, die erhaltene Öl-in-Wasser-Dispersion sauer eingestellt und eine wäßrige Lösung eines wasserlöslichen nicht-ionogenen Melamin-Formaldehyd-Vorkondensats zur Ausbildung der Mikrokapselhülle unter Rühren hinzugefügt wird, dadurch gekennzeichnet, daß zur Stabilisierung der Öl-in-Wasser-Dispersion der pH-Wert der sauren wäßrigen Lösung eines kationisierten Melamin-Formaldehyd-Vorkondensats, das im schwach sauren, neutralen und alkalischen wäßrigen Anwendungsbereich in unlöslicher, kationisierbarer Form vorliegt, in Abwesenheit wasserlöslicher organischer Polymerisate durch Zugabe von Brønsted-Basen unter starkem Rühren soweit angehoben wird, daß das kationisierbare Melamin-Formaldehyd-Vorkondensat aufgrund geänderter Löslichkeitsverhältnisse in feinster Suspension ausfällt.

2. Verfahren nach Anspruch 1, dadurch gekennzeichnet, daß eine etwa 2 bis 12 gew.-%ige Lösung des kationisierten Melamin-Formaldehyd-Vorkondensates eines pH-Wertes von weniger als etwa 3,5, insbesondere etwa 1, 5 bis 3,0, eingesetzt wird.

3. Verfahren nach Anspruch 1 oder 2, dadurch gekennzeichnet, daß der pH-Wert der sauren wäßrigen Lösung des kationisierten Melamin-Formaldehyd-Vorkondensats soweit angehoben wird, daß dieses quantitativ ausfällt.

4. Verfahren nach mindestens einem der Ansprüche 1 bis 3, dadurch gekennzeichnet, daß der pH-Wert der sauren wäßrigen Lösung des kationisierten Melamin-Formaldehyd-Vorkondensats auf mehr als etwa 4,5, insbesondere etwa 5,0 bis 7,0, angehoben wird.

5. Verfahren nach mindestens einem der Ansprüche 1 bis 4, dadurch gekennzeichnet, daß als wasserunlösliches kationisierbares Melamin-Formaldehyd-Vorkondensat ein an Methylolethergruppen freies Produkt verwendet wird.

6. Verfahren nach mindestens einem der Ansprüche 1 bis 5, dadurch gekennzeichnet, daß die saure wäßrige Lösung eines kationisierten niedrigmolekularen Melamin-Formaldehyd-Vorkondensats zur Steuerung des Öltröpfchendurchmessers beim Emulgiervorgang umittelbar nach ihrer Herstellung in die dispersionsstabilisierende Ausfällung überführt wird.

7. Verfahren nach mindestens einem der Ansprüche 1 bis 5, dadurch gekennzeichnet, daß die saure wäßrige Lösung des kationisierten Melamin-Formaldehyd-Vorkondensats zur Steuerung des Öltröpfchendurchmessers beim Emulgiervorgang vor der Überführung in die dispersionsstabilisierende Ausfällung einem Alterungsprozeß von mehreren Stunden Dauer unterworfen wird.

8. Verfahren nach mindestens einem der Ansprüche 1 bis 7, dadurch gekennzeichnet, daß als nichtionogenes Melamin-Formaldehyd-Vorkondensat ein partiell mit Methanol verethertes Melamin-Formaldehyd-Vorkondensat verwendet wird.

9. Verfahren nach mindestens einem der Ansprüche 1 bis 8, dadurch gekennzeichnet, daß das starke Rühren unter Anwendung extrem hoher Scherkräfte bewirkt wird.

10. Verfahren nach Anspruch 8, dadurch gekennzeichnet, daß die extrem hohen Scherkräfte durch ein auf dem Rotor/Stator-Prinzip beruhenden Hochleistungsdispergiergerät bewirkt werden.

11. Verfahren nach mindestens einem der Ansprüche 1 bis 10, dadurch gekennzeichnet, daß die durch das ausgefällte kationisierbare Melamin-Formaldehyd-Vorkondensat stabilisierte Öl-in-Wasser-Dispersion nach ihrer Herstellung wahlweise sofort oder nach mehreren Stunden Standzeit unter leichtem Rühren weiterverarbeitet wird.

12. Verfahren nach mindestens einem der Ansprüche 1 bis 11, dadurch gekennzeichnet, daß dem Reaktionsmedium nach der Ausbildung der Suspension des zuvor wasserlöslichen kationisierten Melamin-Formaldehyd-Vorkondensats spätestens vor Beginn der Wandbildungsreaktion eine wasserlösliche makromolekulare Substanz zugegeben wird.

13. Verfahren nach Anspruch 12, dadurch gekennzeichnet, daß die makromolekulare Substanz in einer solchen Menge hinzugefügt wird, daß auf etwa 0,05 bis 1,5 Gewichtsteile wasserunlösliches kationisierbares Melamin-Formaldehyd-Vorkondensat etwa 0,5 Gewichtsteile wasserlösliche makromolekulare Substanz entfallen.

14. Verfahren nach Anspruch 12 oder 13, dadurch gekennzeichnet, daß die makromolekulare Substanz ein wasserlösliches organisches Polymerisat ist.

15. Verfahren nach Anspruch 12 oder 13, dadurch gekennzeichnet, daß die makromolekulare Substanz eine wasserlösliche organische polymere Verbindung ist.

## Claims

1. Process for microencapsulating hydrophobic oils with colour reactants of colour reaction systems dissolved therein, a cationized melamine/formaldehyde precondensate being precipitated in ultra-fine suspension from its acid aqueous solution, accompanied by vigorous stirring and by modifying the solubility conditions, said suspension is mixed under vigorous stirring with a hydrophobic oil containing the colour reactants in dissolved form, the oil-in-water dispersion obtained is acid-adjusted and an aqueous solution of a water-soluble, non-ionic melamine/formaldehyde precondensate is added, accompanied by stirring, for forming the microcapsule envelope, characterized in that, for stabilizing the oil-in-water dispersion, the pH-value of the acid aqueous solution of a cationized melamine/formaldehyde precondensate which, in the weak acid, neutral and alkaline aqueous use range is present in insoluble cationizable form, is raised in the absence of water-soluble organic polymers by the addition of Bronsted bases and accompanied by vigorous stirring to such an extent that the cationizable melamine/formaldehyde precondensate is precipitated in ultra-fine suspensioon as a result of the modified solubility conditions.

2. Process according to claim 1, characterized in that an approximately 2 to 12% weight solution of the cationized melamine/formaldehyde precondensate with a pH-value of less than approximately 3.5 and, in particular, 1.5 to 3.0 is used.

3. Process according to claims 1 or 2, characterized in that the pH-value of the acid aqueous solution of the cationized melamine/formaldehyde precondensate is raised to such an extent that is precipitated in quantitative form.

4. Process according to at least one of the claims 1 to 3, characterized in that the pH-value of the acid aqueous solution of the cationized melamine/formaldehyde precondensate is raised to more than approximately 4.5 and, in particular, to approximately 5.0 to 7.0.

5. Process according to at least one of the claims 1 to 4, characterized in that a product free from methylolether groups is used as the water-insoluble, cationizable melamine/formaldehyde precondensate.

6. Process according to at least one of the claims 1 to 5, characterized in that the acid aqueous solution of a cationized, low molecular weight melamine/formaldehyde precondensate, immediately following its preparation, is converted into a dispersion-stabilizing precipitate for controlling the oil droplet diameter during the emulsification process.

7. Process according to at least one of the claims 1 to 5, characterized in that the acid aqueous solution of the cationized melamine/formaldehyde precondensate undergoes an ageing process lasting several hours before converting into the dispersion-stabilizing precipitate for controlling the oil droplet diameter during the emulsification process.

8. Process according to at least one of the claims 1 to 7, characterized in that a partly methanol-etherified melamine/formaldehyde precondensate is used as the nonionic melamine/formaldehyde precondensate.

9. Process according to at least one of the claims 1 to 8, characterized in that the vigorous stirring is obtained by using extremely high shear forces.

10. Process according to claim 8, characterized in that the extremely high shear forces are brought about by a high efficiency disperser based on the rotor/stator principle.

11. Process according to at least one of the claims 1 to 10, characterized in that the oil-in-water dispersion stabilized by the precipitated, cationizable melamine/formaldehyde precondensate, after its preparation, can be processed either immediately or after standing for several hours and accompanied by slight stirring.

12. Process according to at least one of the claims 1 to 11, characterized in that a water-soluble macromolecular substance is added to the reaction medium following the formation of the suspension of the previously water-soluble cationized melamine/formaldehyde precondensate and, at the latest, prior to the start of the wall formation reaction.

13. Process according to claim 12, characterized in that the macromolecular substance is added in a quantity such that for approximately 0.05 to 1.5 parts by weight of water-insoluble, cationizable melamine/formaldehyde precondensate there are approximately 0.5 parts by weight of water-soluble macromolecular substances.

14. Process according to claims 12 or 13, characterized in that the macromolecular substance is a water-soluble organic polymer.

15. Process according to claims 12 or 13 characterized in that the macromolecular substance is a water-soluble inorganic polymeric compound.


**Revendications**

1. Procédé de micro-encapsulation d'huiles hydrophobes dans lesquelles sont dissous des partenaires de systèmes de réactions colorées, dans lequel un précondensat mélamine-formaldéhyde cationisé est précipité en très fine suspension sous forte agitation dans sa solution aqueuse acide par modification de la solubilité, cette suspension est mélangée sous forte agitation avec une huile hydrophobe contenant en solution le partenaire de réaction colorée, la dispersion huile-dans-eau obtenue est acidifiée et une solution aqueuse d'un précondensat mélamine-formaldéhyde non ionogène hydrosoluble est ajoutée sous agitation en vue de la formation de l'enveloppe des micro-capsules, caractérisé en ce que, pour la stabilisation de la dispersion huile-dans-eau, la valeur de pH de la solution aqueuse acide d'un précondensat mélamine-formaldehyde cationisé, qui se présente sous une forme cationisable insoluble dans la plage d'utilisation aqueuse faiblement acide, neutre et alcaline, est élevée en l'absence de polymérisats organiques hydrosolubles par addition de bases de Brönsted sous forte agitation dans une mesure suffisante pour que le précondensat élamine-formaldéhyde cationisable précipite en très fine suspension en raison des modifications de la solubilité.

2. Procédé suivant la revendication 1, caractérisé en ce qu'on utilise une solution à environ 2–12% en poids de précondensat mélamine-formaldéhyde cationisé dont le pH a une valeur inférieure à environ 3,5, notamment une valeur d'environ 1,5 à 3,0.

3. Procédé suivant la revendication 1 ou 2, caractérisé en ce que le pH de la solution aqueuse acide du précondensat mélamine-formaldéhyde cationisé est élevé de telle manière que le précondensat précipite quantitativement.

4. Procédé suivant au moins l'une des revendications 1 à 3, caractérisé en ce que la valeur de pH de la solution aqueuse acide du précondensat mélamine-formaldéhyde cationisé est élevée à plus d'environ 4,5, notamment à une valeur comprise entre environ 5,0 et 7,0.

5. Procédé suivant au moins l'une des revendications 1 à 4, caractérisé en ce qu'on utilise comme précondensat mélamine-formaldéhyde cationisable insoluble dans l'eau un produit dépourvu de groupes méthyloléther.

6. Procédé suivant au moins l'une des revendications 1 à 5, caractérisé en ce que la solution aqueuse acide d'un précondensat mélamine-formaldéhyde cationisé de bas poids moléculaire est transformée en le précipité stabilisant la dispersion, en vue de régler le diamètre des gouttelettes d'huile pendant le processus de mise en émulsion, juste après sa préparation.

7. Procédé suivant au moins l'une des revendications 1 à 5, caractérisé en ce que la solution aqueuse acide du précondensat mélamine-formaldéhyde cationisé est soumise à un processus de vieillissement d'une durée de plusieurs heures afin de régler le diamètre des gouttelettes d'huiles pendant le processus de mise en émulsion avant la transformation en le précipité stabilisant la dispersion.

8. Procédé suivant au moins l'une des revendications 1 à 7, caractérisé en ce qu'on utilise comme précondensat mélamine-formaldéhyde non ionogène un précondensat mélamine-formaldéhyde partiellement éthérifié avec du méthanol.

9. Procédé suivant au moins l'une des revendications 1 à 8, caractérisé en ce que l'agitation énergique est effectuée en utilisant des forces de cisaillement extrêmement grandes.

10. Procédé suivant la revendication 8, caractérisé en ce que les forces de cisaillement extrêmement grandes sont exercées par un appareil de dispersion de grande puissance basé sur le principe rotor/stator.

11. Procédé suivant au moins l'une des revendications 1 à 10, caractérisé en ce que la dispersion huile-dans-eau stabilisée par le précondensat mélamine-formaldéhyde cationisable précipité est encore traitée sous légère agitation après sa préparation, au choix immédiatement ou après un temps de repos de plusieurs heures.

12. Procédé suivant au moins l'une des revendications 1 à 11, caractérisé en ce qu'on ajoute au milieu réactionnel après la formation de la suspension du précondensat mélamine-formaldéhyde cationisé auparavant hydrosoluble, au plus tard avant le début de la réaction de formation des parois, une substance macro-moléculaire soluble dans l'eau.

13. Procédé suivant la revendication 12, caractérisé en ce que la substance macro-moléculaire est ajoutée en une quantité telle qu'il y ait environ 0,5 partie en poids de cette substance macro-moléculaire hydrosoluble pour environ 0,05 à 1,5 partie en poids de précondensat mélamine-formaldéhyde cationisable insoluble dans l'eau.

14. Procédé suivant la revendication 12 ou 13, caractérisé en ce que la substance macro-moléculaire est un polymérisat organique hydrosoluble.

15. Procédé suivant la revendication 12 ou 13, caractérisé en ce que la substance macro-moléculaire est un composé polymère inorganique soluble dans l'eau.